(19) 

(11) **EP 4 550 207 B1**

(12) **EUROPEAN PATENT SPECIFICATION**

(45) Date of publication and mention of the grant of the patent: **30.09.2026 Bulletin 2026/40**

(21) Application number: **23306908.7**

(22) Date of filing: **03.11.2023**

(51) International Patent Classification (IPC):
***G06K 19/077*** (2006.01) ***H01Q 1/22*** (2006.01)
***H01Q 1/52*** (2006.01) ***H01Q 9/26*** (2006.01)
***H01Q 13/18*** (2006.01)

(52) Cooperative Patent Classification (CPC):
**G06K 19/07771; H01Q 1/2225; H01Q 1/526; H01Q 9/26**

(54) **A SLOT CAVITY ELEMENT FOR RFID TAGS, AN RFID TAG WITH SUCH A SLOT CAVITY ELEMENT, A CONTAINER WITH SUCH AN RFID TAG AND USE OF THE CONTAINER IN A MICROWAVE OVEN**

SCHLITZHOHLRAUMELEMENT FÜR RFID-ETIKETTEN, RFID-ETIKETT MIT SOLCH EINEM SCHLITZHOHLRAUMELEMENT, BEHÄLTER MIT SOLCH EINEM RFID-ETIKETT UND VERWENDUNG DES BEHÄLTERS IN EINEM MIKROWELLENOFEN

ELÉMENT À CAVITÉ À FENTE POUR ÉTIQUETTES RFID, ÉTIQUETTE RFID AVEC UN TEL ÉLÉMENT À CAVITÉ À FENTE, RÉCIPIENT AVEC UNE TELLE ÉTIQUETTE RFID

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**07.05.2025 Bulletin 2025/19**

(73) Proprietor: **Linxens Holding**
**78200 Mantes-la-Jolie (FR)**

(72) Inventor: **Pantaloni, Jean-Baptiste**
**78200 Mantes la Jolie (FR)**

(74) Representative: **Grünecker Patent- und Rechtsanwälte PartG mbB**
**Leopoldstraße 4**
**80802 München (DE)**

(56) References cited:
**EP-A1- 4 120 133**
**US-A1- 2009 109 034**
**US-A1- 2011 168 788**
**US-A1- 2020 034 678**
**US-B1- 10 311 355**
**US-B2- 8 289 165**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 550 207 B1

## Description

### Field of the Disclosure

The present disclosure relates to a slot cavity element for RFID tags, an RFID tag with such a slot cavity element, a container with such an RFID tag and use of the container in a microwave oven. In particular, the present disclosure relates to a slot cavity element for an RFID tag provided for a microwave dish, an RFID tag with such a slot cavity element, and a container preferably provided as a microwave dish such as a microwave container for use as a cooking dish suitable for cooking in a microwave oven.

In some aspects, the present disclosure is related to an antenna for a radio frequency identification (RFID) tag, and a corresponding RFID tag. The RFID tag is arranged to be useable in a microwave oven, and may for example be arranged on or incorporated in a microwaveable food package or food item. The disclosure further relates to a container, such as a packaging for a microwaveable food item comprising such an RFID tag.

### Technological Background

More and more label converters are integrating RFID into their manufacturing processes. RFID capabilities enable more intensive customer relationships of many kinds, and with an experienced vendor, the transition can usually be smooth and quick. Accordingly, there is an increasing use of RFID tags for a wide variety of applications, such as in smart labels/tags. Conventionally, an RFID tag is arranged as a flat configured transponder, e.g. arranged under a conventional print-coded label, and includes a chip and an antenna. The labels/tags are often made of paper, fabric or plastics, and are normally prepared with the RFID inlays laminated between a carrier and a label media, e.g. for use in specially designed printer units. Smart labels offer advantages over conventional barcode labels, such as higher data capacity, possibility to read and/or write outside a direct line of sight, and the ability to read multiple labels or tags at one time.

Conventionally, an RFID system consists of three hardware or physical components: a chip storing identification data, an antenna as the transmitter that transfers data from the chip to a reader, and a reader representing a programmable logical controller that activates a required function - from recording inventory changes to counterfeiting or theft alarms.

Typically, the antenna and the chip are provided in form of an inlay representing an integrated unit of chip and antenna. Often, these two components are on a flexible carrier that label converters can apply or insert into a final product. Each inlay may have unique programming features based on the end user’s data tracking, control and/or recording requirements. How the customer uses the RFID technology in each case determines what type of inlay the converter needs.

The following customer requirements may influence the inlay design: a) Passive RFID operates only when a signal is given, after which data can be read from or activated by the chip, whereas active RFID operates with a battery-powered chip, which enables additional applications such as time and temperature tracking, b) the operating environment of an RFID application which dictates whether low-frequency, high-frequency or ultra-high-frequency radio waves are used, c) the attachment of the chip to the antenna (a "direction style process" is suitable for many standard layouts, while the "strap attachment process" is suitable for customized inlay layouts and offers processors a more cost-effective solution for complex designs), and d) substrate material (substrates vary significantly - from environmentally friendly substrates such as paper labels to more commonly used materials such as polyester films that can be layered to create a finished label). Contrary to bar codes using an optical recognition process, RFID recognizes and transmits data using radio waves and thin antennas, thereby eliminating the need to worry about things like label alignment or line-of-sight obstruction. For this reason, RFID is implement more often as RFID labels directly incorporated in a packaging material, to form so-called intelligent packaging products. Such intelligent packaging products become increasingly interesting in the application of packages comprising food and the like intended for microwave heating in microwave ovens where the RFID tag can hereby be used e.g. for logistics tracking purposes and the like. Food and the like intended for microwave heating are typically cooked or heated in the microwave oven without removal of the food container package such that the food container package may even be part of the cooking process. During the heating or cooking in the microwave oven, the RFID functionality of an RFID label incorporated into the food container package is no longer needed and used such that the RFID tag is to be removed prior to placement in the microwave oven because exposure of RFID tags to microwaves in a microwave oven leads to a concentrated heating at the RFID tag caused by absorption of microwave radiation by conductive material of the antenna of the RFID tag as explained below in greater detail, thereby posing a safety risk. However, removal of the RFID tag may be cumbersome and difficult, and may also easily be forgotten.

The concentrated heating of RFID tags taking place when exposing RFID tags to microwave radiation in microwave ovens may be understood as follows. Conventional RFID tags have a gap across which the RFID chip is placed. The power received by the RFID tag from a conventional reader device is generally low, in the order of a few microwatts, whereas a microwave oven may typically operate at a power level of at least 800 watts (W), which can generate very high voltages across the gap.

Further, RFID antennas are commonly designed to operate at a ultra-high frequency (UHF), for example in the range of approximately 860 MHz to 960 MHz, with the antenna receiving incident power from an RFID reader and converting it to a voltage across the RFID chip to allow it to operate. A microwave oven, on the other hand, typically operates at a higher frequency, typically in the order of approximately 2.45 GHz.

When exposed to microwaves in a microwave oven, the microwaves will also be incident on the antenna of the RFID tag. The very high power levels and frequency of these microwaves will generate high voltages on the antenna, and in particular over the gap bridged by the RFID chip, since this gap is necessarily relatively small, typically in the range 100-200 pm. This high voltage may cause a breakdown and generate an arc across the gap, possibly leading to deformation of the package, sparking and flashing, and, in the worst case, causing the package to even catch fire. This is considerable safety risk and may also damage the microwave oven.

From document US 2018/0189623 A1, an RFID tag with a shielding layer is known, the shielding layer coupled to the antenna across the gap and overlaying the RFID chip to limit the voltage across the gap when the antenna is exposed to microwaves from a microwave oven.

Although a RFID tag with an additional shielding function may overcome the above-discussed safety problem, the fabrication of an RFID tag with an additional shielding function makes the production of the RFID tag complex, cumbersome and costly.

Document EP 4 120 133 A1 discloses a smart-label system for use on microwave-compatible dishes, wherein an RFID inlay (comprising an RFID chip plus an antenna) is applied to a flat metal shield composed of overlapping foil sections. The overlapping foil sections are designed so they form a shared recess enclosed by the antenna, the antenna crossing the overlaps at least twice, enabling the RFID communication (e.g., at ~13.56 MHz) to pass through the overlap while the metal shield blocks microwave radiation, thereby protecting the RFID circuitry during microwave heating. The shielded inlay is combined with a detachable shielding element (impermeable to microwave radiation) so that when placed on or in a microwave oven the label is safely shielded while remaining readable when outside the microwave.

In document US 2011/168788 A1, a modular slot-cavity structure intended for high-frequency electronics is disclosed. This modular slot-cavity structure comprises a first and second conductive sheet portions laid coplanar and separated by an air gap, forming an electrically insulating slot cavity feature along one side of the sheets. An interconnection element couples the two sheet portions, either by passing through a dielectric body or running externally along the outer surface, thereby enabling vertical interconnection between sheets.

There is an ongoing need for an improved RFID tag, possibly provided with or incorporated into a container, which can be microwaved without safety risks and the other problems discussed in the foregoing.

## Summary of the Disclosure

The above problems and objects may be at least partially resolved in at least one of a slot cavity element, a radio frequency identification (RFID) tag, a container with such an RFID tag, and use of the container in a microwave oven as set forth in the appended claims.

In a first aspect, a slot cavity element for RFID tags in accordance with claim 1 is provided.

In the illustrative embodiments of the first aspect, the slot cavity element for RFID tags comprises a first sheet portion of electrical conductive material, and a second sheet portion of electrical conductive material, wherein the first sheet portion and the second sheet portion are separated by at least one electrically insulating slot cavity feature formed between the first sheet portion and the second sheet portion. A slot cavity feature relates to a cavity feature of slot type provided by a body element or volume of electrically non-conductive material such as air or a dielectric material having a relative dielectric permittivity of greater than 1, wherein slot type means that one of three orthogonal dimensions of the cavity feature is smaller than each of the other dimensions by a factor of at least 2 or 5 or 10 or 20 or 50. Accordingly and from a geometrical point of view, the slot cavity feature may be understood in some illustrative embodiments to substantially define an extension plane defined by a virtual plane normal to the smallest dimension of the slot cavity feature.

In some illustrative embodiments and from a functional point of view, the slot cavity feature may be understood as being defined with respect to edges or sidewalls defining the cavity, having an electrically conductive material, such as a perfect electric conductor (PEC), on two opposite sidewalls or edges normal to surface spanned by greater dimensions of the slot cavity feature (corresponding to a surface parallel to the first and second sheet portions), while having a magnetically conductive material, such as a perfect magnetic conductor (PMC), on sidewalls extending between the two opposite sidewalls or edges.

Herein, the first and second sheet portions may in some interpretations each represent a broad stretch or surface body of a substantially flat conductive material which is dimensioned as a surface body with substantially elastically mechanical characteristic along a direction normal to a main surface of the surface body (where main surface represents a surface of two opposite surfaces of greatest size among the surfaces of the surface body). The surface may be flat in the sense that it is possible to pass from any one point of the surface to any other point of the surface without leaving the

surface, not excluding a possible curvature of the surface which may be made flat by a mechanically elastic deformation.

The term sheet does not imply any limitation on a specific shape of the sheet in a top or bottom view of the sheet, i.e., no limitation to a rectangular shape of the sheet in a top or bottom view of the sheet along a main surface of the sheet is implied. Although some embodiments may be illustrated by means of a rectangular sheet, any other form of sheet may be considered, such as a rectangular sheet with rounded corners, a circular or elliptical sheet of any other shape of sheet, such as a polygonal sheet or a combination of different geometric shapes, optionally with at least one rounded corner.

In some special illustrative embodiments, the at least one of the first and second sheets of electrically conductive material may be provided by a sheet of conductive material, e.g., a sheet metal such as a sheet of copper material or aluminum material or gold material or silver material. For example, a sheet of conductive material may be provided as a metal sheet processed through different processing technologies, mainly including cold rolling and hot rolling, or formed by printing a conductive material on an adhesive and/or carrying material.

The slot cavity element is provided as an element for use as an antenna modification element to be used for modifying an RFID antenna, preferably RFID antennas of meander dipole antenna design, is configured such that radiation at a first frequency in a first frequency range is reflected with a phase shift of substantially $\pi$, wherein the antenna is configured to have a resonance at a second frequency in a second frequency range, preferably in a range from about 800 MHz to 1.0 GHz, e.g., the second frequency being at 860 MHz or at 960 MHz, the first and second frequency ranges being distinct and separate frequency ranges, the first frequency being preferably greater than the second frequency. For example, the first frequency may be at 2.45 GHz, the first frequency range ranging from about 2.1 GHz to about 2.7 GHz. Accordingly, the slot cavity element may be designed to be in a rejection mode with respect to the first frequency, the slot cavity element functioning as an antenna modification element used for protecting an antenna to be modified with the antenna modification element in the first frequency range. In other words, the slot cavity element is configured to provide negative interference between receiving signals and induced signals emitted by the slot cavity element in a range from about 2.1 GHz to 2.7 GHz, preferably at 2.45GHz.

In some illustrative embodiments herein, the first sheet portion and the second sheet portion may be provided as coplanar sheet portions separated by an air gap forming a slot cavity feature of the at least one electrically insulating slot cavity feature along one side of the first and second sheet portions. For example, the slot cavity feature may be a gap such as an air gap or a gap filled with an insulting material. The coplanar sheet portions may be formed such that upper and/or lower main surfaces of the first and second sheet portions may be substantially coplanar such that at least one of the upper main surfaces and the lower main surfaces of the first and second sheet portions may be arranged in the same plane and considered as arranged in a substantially flat planar surface. Herein, the slot cavity element may be considered as an antenna modification element formed in a planar shape for placement on top of or below of an antenna. Accordingly, the slot cavity element may be combined with an antenna without affecting mechanical characteristics of the antenna, such as an elasticity of the antenna used in an RFID tag or label.

In some other illustrative embodiments herein, the first sheet portion may be formed as an annular sheet portion and the second sheet portion is formed as a strip portion. The term annular shape may be understood as representing any shape of the first sheet, the first sheet having an through opening surrounded by a rim or frame portion of the first sheet portion. The term strip portion may represent a rectangular or any other shape obtained by topologically deforming a rectangular shape such that two rectangular dimensions within a main surface of the second sheet portion have an aspect ratio of a length to a width of at least 1.0 or 1.1 or 1.3 or 1.5 or 2. Accordingly, a very compact and easily producible design with a high degree of reproducibility may be provided at low fabrication costs.

In some illustrative examples herein, the second sheet portion may be arranged within an annular opening of the first sheet portion such that the first sheet portion surrounds the second sheet portion, the first and second sheet portions being electrically coupled at opposite sides of the second sheet portion. In some examples herein, the first and second sheet portions may be mechanically attached to each other such that the first and second sheets are in direct electrical and mechanical connection, or the first and second sheet portions may be formed as an integral object obtained from forming two strip-shaped slot cavity features completely within an initially continuous sheet of conductive material. Accordingly, a simple but very efficient design is provided.

In some other illustrative embodiments of the first aspect, the slot cavity element may be provided in a 3-dimensional configuration, the slot cavity element comprising a first body of an insulator material having a first surface and a second surface opposite the first surface, each of the first and second surfaces being of substantially planar shape and having a greater surface area than any remaining surface of the body, a first sheet portion of electrical conductive material formed on the first surface of the first body, and a second sheet portion of electrical conductive material formed on the second surface of the first body. The first body forms a slot cavity feature of the at least one electrically insulating slot cavity feature.

Herein, the slot cavity element may be considered as representing an antenna modification element formed of a stacking of alternating layers of sheet portions representing layers of an electrically conductive material in the stacking which are alternatingly stacked with electrically insulator material acting as a slot cavity feature, wherein a layer of insulator material is interposed between two adjacent layers of electrically conductive material, the stacking comprising at least

three layers having at least one insulating slot cavity feature.

In some illustrative embodiments of the first aspect, at least one of the first and second sheet portion may have a thickness in a range from about 10 μm to about 10,000 μm. For example, special illustrative embodiments herein may provide the thickness in a range from about 10 μm to about 2,000 μm or 10 μm to about 150 μm or 10 μm to about 50 μm or 100 μm to about 2,000 μm or 100 μm to about 150 μm or 150 μm to about 2,000 μm or in a range from 10 μm to about 1,000 μm or in a range from 100 μm to about 1,000 μm or in a range from 150 μm to about 1,000 μm or any combination and/or intersection of two or more of these ranges. Additionally or alternatively, the first body may have a thickness in a range from about 50 μm to about 10,000 μm. For example, the thickness of the first body may be in a range from 50 μm to about 2,000 μm or 50 μm to about 1,000 μm or in a range from 50 μm to about 500 μm or in a range from 50 μm to about 150 μm or any combination and/or intersection of two or more of these ranges. Accordingly, a compact and efficient slot cavity element may be provided.

In some illustrative embodiments of the first aspect, the insulator material may be an epoxy resin comprising material. Additionally or alternatively, the electrical conductive material may comprise at least one of copper, silver, gold, and aluminum. Accordingly, an improved efficiency of the slot cavity element may be achieved.

In some illustrative embodiments of the first aspect, a length of the first body may be in a range from about 20 mm to about 200 mm, such as in a range from about 20 mm to about 150 mm or in a range from about 20 mm to about 100 mm. Additionally or alternatively, a width of the first body may be in a range from about 5 mm to about 150 mm or in a range from about 5 mm to about 100 mm or in a range from about 5 mm to about 70 mm.

In some illustrative embodiments of the first aspect, wherein the slot cavity element may further comprise an interconnection element electrically coupling the first and second sheet portions. Accordingly, a fine tuning of the first frequency may be easily achieved at improved rejection performance at the first frequency. In some illustrative examples herein, the interconnection element may comprise a vertical interconnection extending at least partially through the first body or completely outside of the first body along an outer surface of the first body, the outer surface connecting the first surface with the second surface. Accordingly, the interconnection element may be easily provided at least partially by means of a vertical interconnection.

In some illustrative embodiments of the first aspect, wherein the slot cavity element may further comprise a second body of insulator material disposed on one of the first and second sheet portions, the second body having a third sheet portion of electrical conductive material formed on a surface of the second body opposite the one of the first and second sheet portions. Accordingly, a rejection performance at the first frequency may be improved.

In some illustrative embodiments of the first aspect, the slot cavity element may have a rejection mode in a range from about 2.40 to 2.50 GHz. Accordingly, the slot cavity element is configured to protect an antenna from microwave radiation.

In a second aspect of the present disclosure, an RFID tag in accordance with claim 9 is provided

In the illustrated embodiments of the second aspect, the RFID tag is provided for reading electronic data provided by an RFID chip at a reading frequency, wherein the RFID tag comprises an antenna of substantially planar form and defining a gap and configured to operate at the reading frequency, the RFID chip electrically coupled to the antenna across the gap, and the slot cavity element of one of the first aspect. Herein, the antenna is disposed over a main surface of first or second sheet portion, the antenna being substantially parallel to the main surface of first or second sheet portion. The main surface of the first and second sheet is a surface substantially parallel to a surface in which the antenna substantially extends or which is spanned by the antenna. For example, the antenna may be disposed over the first or second surface of the first body such that the antenna is substantially parallel to the first or second surface of the first body. Accordingly, a suppression of any signal in a frequency range at a rejection mode of the slot cavity element is achieved in proximity to the antenna.

Herein, the antenna may be understood as being of a substantially planar form or the one or more conductive antenna tracks may be understood as being provided by planar track portions.

For example, the antenna may have a thickness which may be considered as representing a dimension oriented substantially normal to the substantially planar form. Herein, the thickness may be understood as representing a dimension of the one or more conductive antenna tracks oriented in parallel to a smallest dimension of the RFID tag among dimensions of the RFID tag measured along three mutual orthogonal directions, such as directions along which dimensions of outer surfaces of the RFID tag may be measured, such as a length dimension, a width dimension, and a thickness dimension providing a length of the RFID tag, a width of the RFID tag, and a thickness of the RFID tag, wherein the thickness of the RFID tag is smaller than each of the length of the RFID tag and the width of the RFID tag. For example, the length of the RFID tag may be greater than the width of the RFID tag, or the length of the RFID tag and the width of the RFID tag may both be of equal size. The thickness of the RFID tag may be smaller by at least a factor of 1.5 or 2 or 5 or 10 or 15 or 20 or 50 than at least one of the length of the RFID tag and the width of the RFID tag.

For example, the antenna or at least the one or more antenna track portions may be considered as being of a substantially planar form meaning that the antenna is a planar antenna in the sense that the thickness of the antenna is smaller than each of a width and a length of the antenna, the length and width of the antenna being defined in accordance with dimension and directions, respectively, corresponding to the width and length of the RFID tag. For example, the

thickness of the antenna may be smaller by at least a factor of 1.5 or 2 or 5 or 10 or 15 or 20 or 50 than at least one of the length of the antenna and the width of the antenna. However, the antenna being indicated as of a planar shape does not necessarily imply that the antenna is provided in an exact planar form in the RFID tag, meaning that the antenna basically only extends within a plane defined by its length and width, but that the antenna may be of a curved shape obtained by deforming an initially planar flat antenna into a curved shape in which the antenna is not extending completely within a single plane. The expression "the antenna is of substantially planar shape" may be understood as meaning that the antenna is of a shape which may be deformed into a flat planar shape in which the thickness of the antenna is defined and understood as representing a dimension of the antenna determined normal to the flat planar shape. Accordingly, the thickness of the antenna may be considered as a local definition of thickness, wherein thickness is defined in a portion of the antenna where the antenna may be considered of a flat planar shape at least to an acceptable degree of approximation, "thickness" being understood as a locally defined thickness.

In some illustrative embodiments herein, the antenna may be an ultra-high frequency (UHF) antenna, the UHF antenna being configured for sending and receiving signals in a UHF band, the UHF band being identified with the frequency band ranging from about 300 MHz to about 3.0 GHz. The UHF antenna is configured for operation in a frequency band ranging from about 300 MHz to about 1.0 GHz, more preferably in the frequency band from about 800 MHz to about 1.0 GHz.

In some illustrative embodiments of the second aspect of the disclosure, the antenna may be made of at least one of copper, silver, steel, gold, and aluminum. Accordingly, an advantageous conductivity of the antenna may be implemented.

In some illustrative embodiments of the second aspect of the disclosure, the antenna may have an antenna loop portion. Furthermore, the slot cavity element may have a hole formed therein, the hole at least partially extending through the slot cavity element in alignment with the antenna loop portion. For example, the hole may be provided as a through hole extending completely through the slot cavity element. In some illustrative examples herein, the hole may completely pierce through at least one of the first and second sheet portions, the hole extending along a direction normal to the first and second sheet portions. In some illustrative but non-limiting example, the hole may extend at least partially through at least the first body, optionally the hole may be a through hole with respect to the first body and a blind hole with respect to a further body.

In some illustrative examples herein, the RFID chip may be within an extension plane of a slot cavity feature of the at least one electrically insulating slot cavity feature.

In some additional or alternative examples herein, the antenna may be (optionally with the RFID chip) on a button tag (such as a carrier substrate part of a size smaller than a size of the hole in the first sheet portion, such as a diameter size of the hole). Herein, the button tag may be completely arranged within the hole and located in a plane substantially coplanar with the slot cavity between the first and second sheet portions.

In some illustrative examples herein, the antenna loop portion preferably may partially extend into the hole. In some more illustrative example, the RFID chip may be arranged within a slot cavity feature of the at least one electrically insulating slot cavity feature. For example, the RFID chip may be interposed between two sheet portions, e.g., in the first body of the slot cavity element. In this way, the hole may allow coupling between the slot cavity feature and the loop, thereby the hole supporting the antenna function of the RFID tag. For example, the antenna may be (optionally with the RFID chip) on a button tag (such as a carrier substrate part of a size smaller than a size of the hole in the first sheet portion, such as a diameter size of the hole). Herein, the button tag may be completely arranged within the hole and located in a plane substantially coplanar with the slot cavity between the first and second sheet portions. This allows to reduce a thickness of the RFID tag. For example, a button tag may be inserted into the hole such that at least an antenna part (or even an entire antenna on the button tag) in the hole may be kept at a position in plane with the slot cavity feature of the slot cavity element.

In some illustrative embodiments of the second aspect of the disclosure, the antenna may be formed on or embedded into a tag substrate, such as a substrate comprising PET or paper or an epoxy resin containing material, the tag substrate having a thickness in a range from about 0.5 mm to about 5 mm, e.g., to about 2 mm. Accordingly, the RFID tag may be provided in a compact way suitable for labelling a great variety of items.

In some illustrative examples herein, the antenna may be formed of an etched or punched or cut, e.g., laser-cut, conductive material, at least partially embedded into an insulating material. For example, the antenna may be embedded into the insulating material at least such that the gap is at least partially embedded into the insulating material. Additionally or alternatively, the insulating material may optionally comprise PP, PE, PET or paper or an epoxy resin containing material. Accordingly, a solid and compact RFID tag may be provided, the risk arcing at the gap of the antenna being at least reduced.

In some more illustrative examples of the above embodiments having the antenna at least partially embedded into the insulating material, the insulating material may be a material having a relative dielectric constant of less then 6, preferably less than 5 or less than 4 or less than 3. Accordingly, an advantageous RFID tag with reduced risk of arcing and undesired heating may be provided.

In some illustrative embodiments of the second aspect of the disclosure, the antenna may be provided as a slot-

loop hybrid antenna. The antenna of the slot-hybrid antenna type having the one or more plurality of conductive tracks comprises a loop portion having a loop-shaped track routing and two contact pad portions, wherein the two contact portions are coupled to the loop shaped track routing and separated by the gap in the loop portion, and two antenna dipole portions extending away from the loop portion and being coupled to the loop portion at opposing sides of the loop portion. An according antenna may be easily provided with exact determined electric characteristics without undesired fabrication tolerances. In some illustrative examples herein, the loop portion may be arranged substantially centrally in the antenna. Accordingly, a symmetric design with advantageous reproducibility may be provided. In some other illustrative examples herein, the contact pads may have a width of at least 110% or 120% of a width of the loop-shaped track routing. Accordingly, an advantageous size of the contact pads for receiving the chip or chip module may be provided. In some illustrative examples herein, each of the two antenna dipole portions may have an antenna end portion of substantially circular shape coupled to an antenna dipole track portion. In some other illustrative examples herein, the two antenna dipole portions may be each formed in a meander-like shape, each of the two antenna dipole portions having at least two dipole track parts extending in parallel to each other. Accordingly, a compact antenna design without performance loss may be implemented.

In a third aspect of the present disclosure, a container, such as a microwave container representing a microwave dish, in accordance with claim 12 is provided. In the illustrative embodiments herein, the container comprises a container body, and the RFID tag of the second aspect. The RFID tag is arranged on an outer surface of the container body or the container body is a cast body and the RFID tag is in-molded into the container body. Accordingly, a container with RFID tag suitable for use in a microwave is provided.

In some illustrative embodiments herein, the container may be filled with a liquid-containing substance, e.g., a water-containing substance such as an aqueous substance.

In a fourth aspect of the present disclosure, use of the container of the third aspect in accordance with claim 13 is disclosed. Herein, the container is used with a microwave oven for heating the liquid-containing substance, wherein the microwave oven has an electric power of at least 800 W, such as one of 900 W, 1500 W, 1800 W, and 2100 W.

## Brief Description of the Drawings

Various illustrative embodiments and other advantages of the various aspects of the present disclosure will become apparent from the detailed description of the accompanying Figs. as presented below.

Figs. 1a and 1b show schematic top views of antennas of an RFID tag in accordance with different illustrative embodiments of the present disclosure.

Fig. 2 shows, in a schematic perspective view, a slot cavity element in accordance with some illustrative embodiments of the present disclosure.

Fig. 3 shows graph of a measurement of resonance and rejection of the slot cavity element shown in Fig. 2.

Fig. 5 schematically shows, in a schematic perspective view, a conductive sheet portion of a slot cavity element in accordance with some other illustrative embodiments of the present disclosure.

Figs. 6a to 6d schematically show shapes of a conductive sheet portion of a slot cavity element in accordance with some illustrative embodiments of the present disclosure.

Fig. 7 shows, in a schematic top view, a slot cavity element in accordance with some other illustrative embodiments of the present disclosure.

The Figs. accompanying the present disclosure are only provided for schematically showing some concepts and aspects of the present disclosure without showing all possible details of certain embodiments and without necessarily being actually to scale.

## Detailed Description of Preferred Embodiments

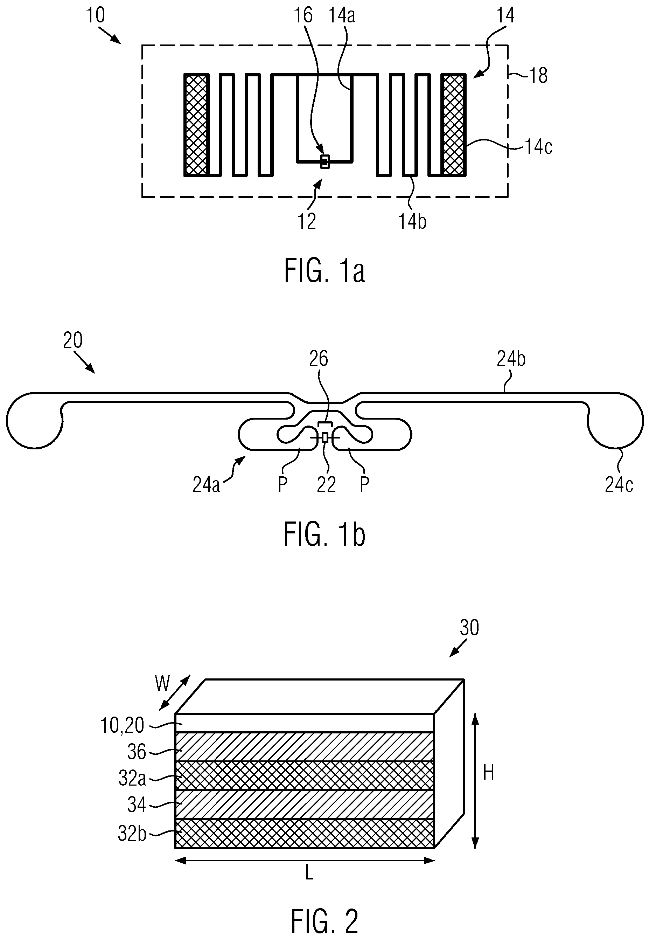

With respect to Figs. 1a and 1b, illustrative designs of an RFID tag and an antenna for this type of RFID tag are described. However, the explicitly shown antenna designs are not limiting and are only used as an example and the person skilled in the art will understand that an RFID tag may be provided with an antenna having an antenna design different from the explicitly shown antenna design of Figs. 1a and Fig. 1b.

Referring to Fig. 1a, an RFID tag 10 is schematically illustrated in a schematic top view, the RFID tag 10 having an antenna 14 and the antenna 14 may be provided on a tag substrate 18. The broken line in Fig. 1a indicates that the tag

substrate 18 is optional and an RFID tag 10 may be provided without the tag substrate 18 in some illustrative examples, whereas the tag substrate 18 may be present in some other illustrative examples.

In accordance with some illustrative embodiments of the RFID tag 10, the tag substrate 18 may be a substrate comprising PP, PE, PET, or paper, or an epoxy resin containing material. Additionally or alternatively, the tag substrate may be a substrate formed of a material having a relative dielectric permittivity of less than 6, preferably a relative dielectric permittivity of less than 3. The tag substrate 18 may be provided such that the antenna 14 is either formed on a main surface of the tag substrate 18, or embedded into the tag substrate 18. For example, the antenna 14 may be provided with one or more conductive antenna tracks fabricated of an etched or punched or cut, e.g. laser cut, conductive material, which may be arranged on the main surface of the tag substrate 18, or the antenna may be formed of conductive ink printed onto the main surface of the tag substrate 18. Alternatively, the antenna 14 may be at least partially embedded into the tag substrate 18, such that at least only a portion of the antenna 14 is completely covered by the tag substrate 18.

With ongoing reference to Fig. 1a, the antenna 14 may be provided in the form of a slot-loop hybrid antenna having one or more conductive tracks comprising a loop portion 14a having a loop shaped track routing and two contact pad portions provided such that a gap 16 is formed between the pad portions representing a slot of the slot-loop hybrid antenna design, the two contact portions being coupled to the loop-shaped track routing 14a and separated by the gap 16 in the loop portion 14a. The antenna 14 further comprises two antenna dipole portions 14b extending away from the loop portion 14a and being coupled to the loop portion 14a at opposing sides of the loop portion 14a. The antenna 14 further comprises antenna end portions 14c terminating the antenna dipole portions 14b. For example, as shown in Fig. 1a, the antenna dipole portion 14b may represent meander routing tracks, the end portion 14c representing an end portion of the meander routing track with increased width as compared to a width of the routing tracks in the meander routing tracks.

In the context of Fig. 1a, a width of the RFID tag 10 and its elements may be identified with a dimension vertical in the illustration of Fig. 1a, while a length dimension may be identified as a dimension horizontal in the illustration of Fig. 1a. Accordingly, the length (direction) is parallel to an extension direction along which the antenna dipole portions 14b extend away from the loop portion 14a, while the width (direction) is perpendicular to the length (direction). A thickness (direction) is then oriented perpendicular to each of the length (direction) and width (direction).

In accordance with some illustrative embodiments of the present disclosure, the antenna 14 may represent a planar antenna design formed by a flat conductor. However, this does not impose any limitations of the present disclosure and a wire routing with a non-flat wire may be used instead of the flat conductor routing shown in Fig. 1a.

With further reference to Fig. 1a, the RFID tag 10 further comprises a chip 12, which is arranged at the loop portion 14a at the gap 16, the chip 12 straddling over the gap 16 and closing the loop portion 14a at the gap.

Referring to Fig. 1b, an RFID tag 20 for reading electronic data provided by an RFID chip 22 at the reading frequency of the RFID tag 20 is schematically illustrated in accordance with some other illustrative embodiments.

As shown in Fig. 1b, the RFID tag 20 has an antenna 24. Similarly to the antenna 10 of Fig. 1a, the antenna 24 may be provided on an optional tag substrate (not illustrated). For example, the optional tag substrate (not illustrated) may be a substrate comprising PP, PE, PET, or paper, or an epoxy resin containing material. Additionally or alternatively, the optional tag substrate (not illustrated) may be a substrate formed of a material having a relative dielectric permittivity of less than 6, preferably a relative dielectric permittivity of less than 3. The optional tag substrate (not illustrated) may be provided such that the antenna 24 is either formed on a main surface of the optional tag substrate (not illustrated), or embedded into the optional tag substrate (not illustrated). For example, the antenna 24 may be provided with one or more conductive antenna tracks fabricated of an etched or punched or cut, e.g. laser cut, conductive material, which may be arranged on the main surface of the optional tag substrate (not illustrated), or the antenna may be formed of conductive ink printed onto the main surface of the optional tag substrate (not illustrated). Alternatively, the antenna 24 may be at least partially embedded into the optional tag substrate (not illustrated), such that at least only a portion of the antenna 24 is completely covered by the optional tag substrate (not illustrated).

With ongoing reference to Fig. 1b, the antenna 24 may be provided in the form of a slot-loop hybrid antenna having one or more conductive tracks comprising a loop portion 24a having a loop shaped track routing and two contact pad portions P provided such that a gap 26 is formed between the contact pad portions P representing a slot of the slot-loop hybrid antenna design, the two contact pad portions P being coupled to the loop-shaped track routing 24a and separated by the gap 26 in the loop portion 24a. Furthermore, the antenna 24 comprises two antenna dipole portions 24b extending away from the loop portion 24a and being coupled to the loop portion 24a at opposing sides of the loop portion 24a. The antenna 24 further comprises antenna end portions 24c terminating the antenna dipole portions 24b. For example, as shown in Fig. 1b, the antenna dipole portion 24b may represent linearly extending routing tracks defining a length direction of the antenna 24, the end portion 24c representing an end portion of the linearly extending routing track with increased width as compared to a width of the linearly extending routing track in each of the antenna dipole portions 24b.

In the context of Fig. 1b, a width of the RFID tag 20 and its elements may be identified with a dimension vertical in the illustration of Fig. 1b, while a length dimension may be identified as a dimension horizontal in the illustration of Fig. 1b. Accordingly, the length (direction) is parallel to an extension direction along which the antenna dipole portions 24b linearly extend away from the loop portion 24a, while the width (direction) is perpendicular to the length (direction). A thickness

(direction) is then oriented perpendicular to each of the length (direction) and width (direction).

In accordance with some illustrative embodiments of the present disclosure, the antenna 24 may represent a planar antenna design formed by a flat conductor. However, this does not impose any limitations of the present disclosure and a wire routing with a non-flat wire may be used instead of the flat conductor routing shown in Fig. 1b.

With further reference to Fig. 1b, the RFID tag 20 further comprises a chip 22, which is arranged at the loop portion 24a at the gap 26, the chip 22 straddling over the gap 26 and closing the loop portion 24a at the gap 26 between the contact pad portions P.

However, the above described antenna designs are not limiting but only illustrative and any modification of these antenna designs may be used instead, e.g., changing shape and dimensions of the antenna dipole portions and/or loop portion and/or end portions.

Referring to Fig. 2, a slot cavity element 30 for RFID tags is shown, e.g., an RFID tag as described above with respect to the RFID tags 10 and 20 of Figs. 1a and 1b. According to dimensions of the RFID tags 10 and 20 as discussed above, the slot cavity element 30 has a thickness or height H, a length L and a width W which may be understood in compliance with width (direction), length (direction) and thickness (direction) of any of the RFID tags 10 and 20 described above.

In the illustrative embodiments herein, the slot cavity element 30 comprises a first sheet portion 32a of an electrical conductive material and a second sheet portion 30b of an electrical conductive material, the first sheet portion 32a and the second sheet portion 32b being separated by at least one electrically insulating slot cavity feature formed between the first sheet portion and the second sheet portion 32b. In the illustrated example shown in Fig. 2, one slot cavity feature is shown between the first and second sheet portions 32a and 32b, the slot cavity feature being given by a body 34 of insulator material having a first surface and a second surface opposite the first surface, each of the first and second surfaces being of substantially greater shape and having a greater surface area than any remaining surface of the body 34, such that the first sheet portion 32a is formed on the first surface of the body 34 and the second sheet portion 32b is formed on the second surface of the body 34.

Although Fig. 2 schematically shows the slot cavity element 30 as being provided in the form of a cuboid, this does not pose any limitation under the present disclosure and the slot cavity element may be provided as a body with rounded edges and corners instead.

As illustrated in Fig. 2, the RFID tag 10 or 20 may be arranged on an upper surface of the first sheet portion 32a, a lower surface of a tag substrate 36 contacting the upper surface of the first sheet portion 32a. However, this does not pose any limitation to the present disclosure and the layer 36 may represent an adhesive layer for attaching the RFID tag 10, 20 to the upper surface of the first sheet portion 32a instead. Herein, an area of the upper surface of the first sheet portion 32a may be provided such that the first sheet portion 32a completely covers a lower surface of the RFID tag 10, 20.

In accordance with some illustrative embodiments of the present disclosure, the body 34 may be formed of an epoxy resin comprising material. A thickness of the body 34 may be in a range from about 50 $\mu$m to about 10,000 $\mu$m. Additionally or alternatively, a length of the body 34 may be in a range from about 20mm to about 200mm. For example, a width of the body 34 may be in a range from about 5mm to about 150mm.

Each of the first sheet portion 32a and the second sheet portion 32b may be formed of an electrical conductive material comprising at least one of copper, silver, gold, and aluminum. In a preferred embodiment herein, the first sheet portion 32a and the second sheet portion 32b may be formed of copper.

In some illustrative examples, a length and width of each of the first and second sheet portions 32a and 32b may match length and width of the body 34 and/or a thickness of the first and second sheet portions may be in a range from about 10 $\mu$m to about 10,000 $\mu$m.

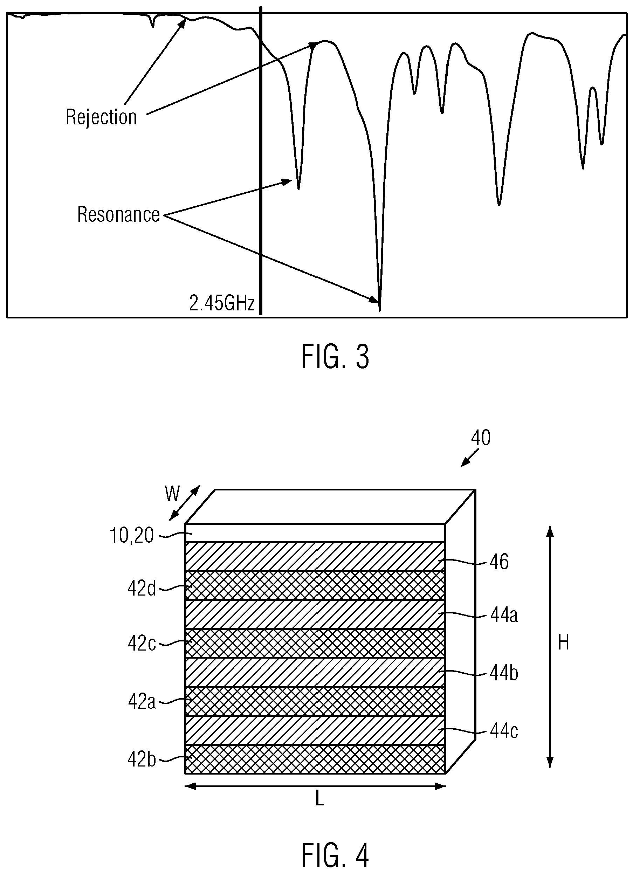

Referring to Fig. 3, a graphical relation between signal rejection and frequency of the slot cavity element 30 as obtained by the inventor, is illustrated. In the illustration of Fig. 3, the vertical axis represents a signal damping measured in dB, the horizontal axis showing frequency. A frequency at 2.45GHz is shown by vertical line, a rejection mode at 3GHz and close to 1GHz being indicated by "rejection" in the graphical illustration of Fig. 3. Resonances are further marked as local minima in the course shown in Fig. 3. Particularly, the graphical representation as obtained by the inventor in the special but non-limiting example of a slot cavity element with dimensions of 52x20x1.5mm for LxWxH and illustrated in Fig. 3 shows that the slot cavity element having resonances away from the microwave frequency of 2.35GHz used in a microwave oven, thereby showing a signal damping characteristic of the slot cavity element for RFID tags of the high frequencies usually employed by microwave ovens. The graphical representation in Fig. 3 shows that a reflection coefficient S11 is close to 0 dB and phase is shifted by 180° such that the slot cavity element results in sending a signal at 2.45 GHz back in anti-phase relative to an incoming signal.

Referring to Fig. 4, a further embodiment of a slot cavity element is schematically shown by means of slot cavity element 40 schematically illustrated in a schematic perspective view in Fig. 4.

As shown in Fig. 4, the slot cavity element 40 for RFID tags is shown in a perspective view, e.g., comprising an RFID tag as described above with respect to the RFID tags 10 and 20 of Figs. 1a and 1b. According to dimensions of the RFID tags 10 and 20 as discussed above, the slot cavity element 40 has a thickness or height H, a length L and a width W

which may be understood in compliance with width (direction), length (direction) and thickness (direction) of any of the RFID tags 10 and 20 described above and also in compliance with the geometric dimensions of the slot cavity element 30 described above.

In the illustrative embodiments herein, the slot cavity element 40 comprises a first sheet portion 42a of an electrical conductive material and a second sheet portion 40b of an electrical conductive material, the first sheet portion 42a and the second sheet portion 42b being separated an electrically insulating slot cavity feature formed between the first sheet portion 42a and the second sheet portion 42b, the electrically insulating slot cavity feature being given by a first body 44c of insulator material having a first surface and a second surface opposite the first surface. Each of the first and second surfaces of the first body 44c is of substantially greater shape and has a greater surface area than any remaining surface of the first body 44c, such that the first sheet portion 42a is formed on the first surface of the first body 44c and the second sheet portion 42b is formed on the second surface of the first body 44c.

The slot cavity element 40 further comprises a third sheet portion 42c of an electrical conductive material over the first sheet portion 42a and another electrically insulating slot cavity feature formed between the first sheet portion 42a and the third sheet portion 42c. Herein, this electrically insulating slot cavity feature is given by a second body 44b of insulator material having a third surface and a fourth surface opposite the third surface. Each of the third and fourth surfaces of the second body 44b is of substantially greater shape and has a greater surface area than any remaining surface of the second body 44b, such that the first sheet portion 42a is formed on the third surface of the second body 44b and the third sheet portion 42c is formed on the fourth surface of the second body 44b.

As shown in Fig. 4, the slot cavity element 40 may further comprise a fourth sheet portion 42d of an electrical conductive material over the third sheet portion 42c and another electrically insulating slot cavity feature formed between the third sheet portion 42c and the fourth sheet portion 42d. Herein, this electrically insulating slot cavity feature is given by a third body 44a of insulator material having a fifth surface and a sixth surface opposite the fifth surface. Each of the fifth and sixth surfaces of the third body 44a is of substantially greater shape and has a greater surface area than any remaining surface of the third body 44a, such that the third sheet portion 42c is formed on the fifth surface of the third body 44a and the fourth sheet portion 42d is formed on the sixth surface of the third body 44a.

Although Fig. 4 shows three insulating slot cavity features, this does not impose any limitation and only two insulating cavity features with three sheet portions or more than three insulating cavity features with an according number of sheet portions may be provided. For example, in the general case of N insulating cavity features, N+1 sheet portions may be provided. In some special but non-limiting examples, N may be an uneven natural number $N \geq 1$.

Although Fig. 4 schematically shows the slot cavity element 40 as being provided in the form of a cuboid, this does not pose any limitation under the present disclosure and the slot cavity element 40 may be provided as a body with rounded edges and corners instead.

As illustrated in Fig. 4, the RFID tag 10 or 20 may be arranged on an upper surface of the fourth sheet portion 42d, a lower surface of a tag substrate 46 contacting the upper surface of the fourth sheet portion 42d. However, this does not pose any limitation to the present disclosure and the layer 46 may represent an adhesive layer for attaching the RFID tag 10, 20 to the upper surface of the fourth sheet portion 42d instead. Herein, an area of the upper surface of the fourth sheet portion 42d may be provided such that the fourth sheet portion 42d completely covers a lower surface of the RFID tag 10, 20.

In accordance with some illustrative embodiments of the present disclosure, the bodies 44a to 44c may be formed of an epoxy resin comprising material. A thickness of the bodies 44a to 44c may be in a range from about 50 μm to about 150 μm, e.g., in a range from 70 μm to 110 μm. More preferably in a range from 75μ to 110 μm. Additionally or alternatively, a length of the bodies 44a to 44c may be in a range from about 20mm to about 100mm, such as in a range from about 30mm to 60mm, preferably in a range from 40mm to 50mm. For example, a width of the bodies 44a to 44c may be in a range from about 5mm to about 70mm, such as in a range from 10mm to 20mm. For example, the bodies 44a to 44c may be made of identical shape and dimensions, formed of identical material. Alternatively, the bodies 44a to 44c may be made of different shapes and/or different dimensions and/or formed of different materials.

Each of the sheet portions 42a to 42d may be formed of an electrical conductive material comprising at least one of copper, silver, gold, and aluminum. In a preferred embodiment herein, the sheet portions 42a to 42d may be formed of copper.

In some illustrative examples, a length and width of each of the sheet portions 42a to 42d may match length and width of the respective one of the bodies 44a to 44c and/or a thickness of the sheet portions 42a to 42d may be in a range from about 10 μm to about 50 μm , e.g. in range from 10 μm to 20 μm , preferably between 50 μm and 20 μm.

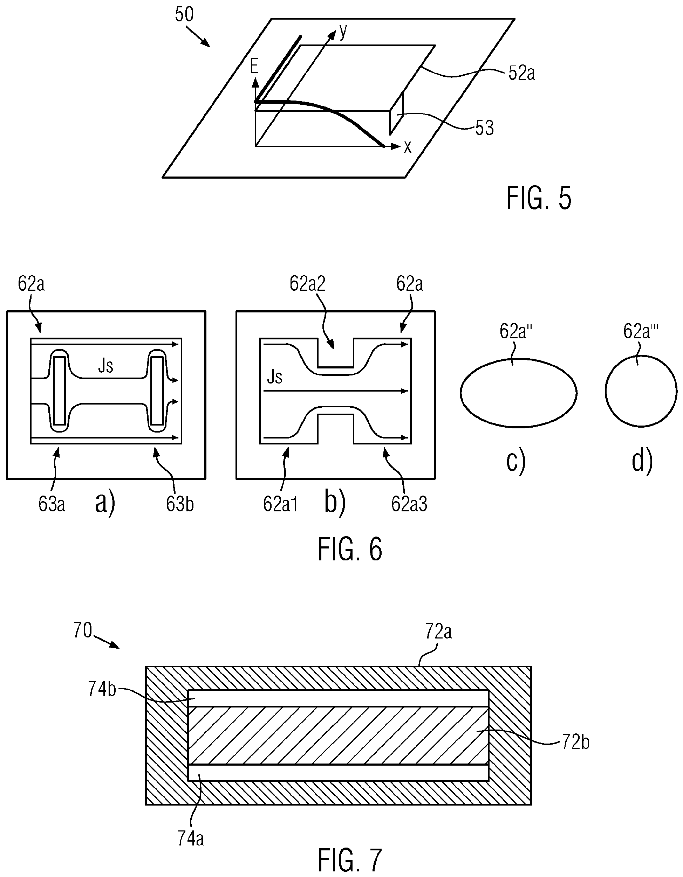

With respect to Fig. 5, embodiments of the slot cavity elements 30 and 40 as illustrated and described with regard to Figs. 2 and 4 above will be further disclosed.

Fig. 5 shows schematically a slot cavity element 50 including a sheet portion 52a corresponding to one of the first sheet portions 32a and 42a or 42c or 42d above. For the sake of clarity in the illustration of Fig. 5, the further sheet portion or portions corresponding to the second sheet portion 32b or 42b as described above and the body 34 or 44c are omitted. Instead, Fig. 5 shows an interconnection element 53 electrically and mechanically coupled to the first sheet portion 52a.

For example, the interconnect element 53 may form an integral part of the first sheet portion 52a or may represent a separate element electrically and mechanically fixed to the first sheet portion 52a at one side surface of the first sheet portion 52a. The interconnection element 53 substantially extends along a normal direction to a main surface of the first sheet portion 52a, thereby representing a vertical interconnection element extending at least partially along an outer surface of the body 34 or 44c of the embodiments described above with regard to Figs. 2 and 4. Alternatively, the interconnection element 53 may completely or at least partially extend through the body 34 or 44c when referring to the embodiments 30 and 40 as described above. The interconnection element 53 functions as the vertical interconnection element electrically coupling the first sheet portion 52a with at least one further sheet portion provided in the slot cavity element 50.

The interconnection element 53 allows for swapping the resonance and rejection zones of the slot cavity element 50 without changing the size of the slot cavity element 50. Thereby, providing a simple way to invert resonance and rejection zones and ensuring that the rejection may be at a desired frequency value at a given size of the slot cavity element 50 e.g. any rejection being present at 2.45GHz at a given size of the slot cavity element 50. The effect of the interconnection element on an electric field distribution within the first sheet portion 52a is indicated by a graphical representation of the set component of the electrical field E plotted along the X and Y axis in Fig. 5 showing a decline in the electric field towards the location of the electrical interconnection element.

Referring to Fig. 6, different designs of sheet portions, such as the first sheet portions described with regard to Figs. 2 and 4 above are shown in schematic top views in Figs. 6a, 6b, 6c, and 6d.

Fig. 6a schematically shows a design 62a', which may be implemented for at least the first sheet portion of one of the slot cavity elements 20 and 30 described above, the sheet portion design 62a' being of a rectangular shape having a slot cavity feature 63a and a slot cavity feature 63b extending along a substantial width dimension of the sheet portion illustrated in Fig. 6a.

Furthermore, Fig. 6a indicates by arrows Js, a flow of current during operation of the slot cavity element, showing the action of the slot cavity features 63a and 63b as resulting in a concentration of the local current density at the slot cavity feature 63a and the slot cavity feature 63b. The effect of the design 62a' shown in Fig. 6a is mainly to lengthen the path of electric current, thereby allowing to extend the electrical length while maintaining a given size of the sheet portion along its length direction. Morover, it becomes possible to modify the characteristic impedance of the slot cavity element locally Zc(x). Furthermore, such a slot cavity element could be used for filtering.

Fig. 6b schematically shows in a top view, an alternative design 62a, the sheet portion 62a having portions of greater width 62a1 and 62a3 and a restricted width portion 62a2 coupling the portion 62a1 and 62a3.

Similarly to Fig. 6a, Fig. 6b illustrates arrows Js representing current flow during operation of a slot cavity element including such a sheet portion, the local current density increasing at the restricted width portion 62a2. Similarly to Fig. 6a, the path of electric currents is lengthened at the portions of increased local current density, thereby extending the electrical length of the sheet portion without changing its geometric size along its length direction.

Alternatively, Fig. 6c and Fig. 6d show designs 62a" and 62a‴ of sheet portions having elliptical and circular shape. Also herein, an electrical length of the sheet portions is adjusted by the geometric shape of the sheet portions as illustrated in Fig. 6c and Fig. 6d.

Referring to Fig. 7, a slot cavity element for RFID tags in accordance with some other illustrative embodiments of the present disclosure is schematically illustrated. The slot cavity element 70 of Fig. 7 comprises a first sheet portion 72a and a second sheet portion 72b, the first sheet portion 72a and the second sheet portion 72b being separated by electrically insulating slot cavity features, the slot cavity features represented in Fig. 7 by slots 74a and 74b formed between the first and second sheet portions 72a and 72b. For example, the slots 74a and 74b may be air slots or slots filled with an insulating material such as a dielectric material with relative dielectric permittivity of less than 6, preferably less than 5 or less than 4 or less than 3.

In some illustrative embodiments herein, the first sheet portion 72a and the second sheet portion 72b are provided as co-planar feed portions separated by an air gap forming each of the slot cavity features 74a and 74b along sides of the first and second sheet portions 72a and 72b. In some special illustrative examples herein, the first sheet portion 72a is formed as an annular sheet portion, while the second sheet portion 72b is formed as a strip portion, the second sheet portion being arranged within an annular opening of the first sheet portion 72a, such that the first sheet portion 72a surrounds the second sheet portion 72b. The first and second sheet portions 72a and 72b may be at least electrically coupled at opposite sides of the second sheet portion, as some special examples herein, the first and second sheet portions 72a and 72b being integrally formed from one sheet portion. For example, a sheet portion may be subjected to a cutting or punching process for forming the slot cavity features 64a and 64b, thereby defining the second sheet portion 72b and the first sheet portion 72a in the initially provided sheet portion.

Although Fig. 7 shows the slot cavity element 70 having two slots 74a and 74b, this does not impose any limitation and there may be a single slot, e.g., a slot completely surrounding the second sheet portion 72b. That is, this slot (not illustrated) may be considered along an interior edge of the annular opening of the first sheet portion 72a and the outer edge of the second sheet portion 72b, a magnetic coupling being established between the sheet portions 72a and 72b.

In comparison with Fig. 6, the slot cavity element 70 of Fig. 7 differs from the sheet portion design 62a' shown in Fig. 6a in that the slot cavity features 74a and 74b of the slot cavity element 70 in Fig. 7 are oriented perpendicular to the orientation of the slot cavity features 63a and 63b of the design 62a' shown in Fig. 6a.

In applications of an RFID tag for reading electronic data as disclosed herein with respect to Figs. 1 and 2, the antenna being modified by a slot cavity element in accordance with one of the slot cavity elements 20, 30 and 70 described above with respect to Figs. 2, 4, and 7, an RFID tag for reading electronic data provided by an RFID chip at a reading frequency is provided, the RFID tag being protected against harmful influence of high frequencies subjected to the RFID tag at higher powers such as in a microwave oven. For example, the RFID tag disclosed in various illustrative embodiments herein may be provided with a container, preferably a microwave dish, the container comprising a container body and the RFID tag in one of the illustrative embodiments described herein being arranged on an outer surface of the container body or the container body being a cast body and the RFID tag being molded into the container body. The use of such a container in a microwave oven for heating a liquid containing substance received within the container body, the RFID tag is maintained in its complete function despite the exposure to electric power generated by the microwave oven. The inventor found out that RFID tags in accordance with the present disclosure, may be subjected to microwave power of at least 800W, such as one of 900W, 1000W, 1500W, 1800W and 2100W without negatively effecting the operation of the RFID tag through the exposure to microwave power.

The inventor performed test on samples of embodiments of the present disclosure, reproducing the result of an optimized behavior of RFID tags in accordance with embodiments of the present disclosure exposed to microwave radiation with 2,45 GHz, the RFID tags showing rejection at frequencies higher 2 GHz regardless of microwave oven and EM field polarisations. In the table below, results of these tests are summarized. For example, testing began in 2022 with RFID tags based on conventional FR4 double-sided PCBs having 1.5 mm thickness.

| Properties / Materials | 18/100/18 | 18/75/18 | 35/110/18/35 | 18/110/18/18 |
|---|---|---|---|---|
| Construction | Cu/EGT/Cu | Cu/EGT/Cu | Cu/EGT/Adh/Cu | Cu/EGT/Adh/Cu |
| Material base | A2 | A2 | A1 | A1 |
| Dk (1MHz) | 5.90 | 5.49 | - | - |
| Dk (1GHz) | 4.54 | 4.40 | 4.40* | 4.40* |
| Df (1MHz) | 0.015 | 0.017 | - | - |
| Df (1GHz) | 0.019 | 0.019 | 0.020* | 0.020* |
| Tg(°C, onset) | 155 | 154 | 148 | 148 |

With regard to Fig. 2 and 4, the slot cavity elements 30 and 40 may be modified as follows. In some examples of the slot cavity element 30 and 40 not explicitly shown in Fig. 2 and 4, a hole extending at least partially through the slot cavity element 30 or 40 may be realized, the hole being such that an antenna loop portion of an antenna partially extends into the hole. In some more illustrative example herein, an RFID chip of the antenna may be arranged within a slot cavity feature of the slot cavity element 30 or 40. For example, the RFID chip may be interposed between two sheet portions, e.g., in the slot cavity feature. In this way, the hole may allow coupling between the slot cavity feature and the loop, thereby the hole supporting the antenna function of the RFID tag. This allows to reduce a thickness of the RFID tag. For example, part of the antenna or a button tag may be inserted into the hole such that an antenna part or even an entire antenna on the button tag in the hole may be kept at a position in plane with the slot cavity feature of the slot cavity element.

In some not explicitly illustrated examples herein, the antenna may be (optionally with the RFID chip) on a button tag (such as a carrier substrate part of a size smaller than a size of the hole in the first sheet portion, such as a diameter size of the hole). Herein, the button tag may be completely arranged within the hole and located in a plane substantially coplanar with the slot cavity between the first and second sheet portions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations,

elements, and/or components, but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise. "Approximately" or "substantially" as applied to a particular value of a range applies to both values, and unless otherwise dependent on the precision of the instrument measuring the value, may indicate +/- 10% of the stated value(s).

**Claims**

**1.** A slot cavity element (30, 40, 70) for RFID tags (10, 20), the slot cavity element (30, 40) comprising:

a first sheet portion (32a, 42a, 72a) of electrical conductive material; and
a second sheet portion (32b, 42b, 72b) of electrical conductive material,
wherein the first sheet portion (32a, 42a, 72a) and the second sheet portion (32a, 42b, 72b) are separated by at least one electrically insulating slot cavity feature formed between the first sheet portion (32a, 42a, 72a) and the second sheet portion (32b, 42b, 72b), and
wherein the first sheet portion (72a) is formed as an annular sheet portion and the second sheet portion (72b) is formed as a strip portion,
**characterized in that** the second sheet portion (72b) is arranged within an annular opening of the first sheet portion (72a) such that the first sheet portion (72a) surrounds the second sheet portion (72b), the first and second sheet portions (72a, 72b) being electrically coupled at opposite sides of the second sheet portion (72b).

**2.** The slot cavity element (30, 40) of claim 1, further comprising at least one of:

an interconnection element (53) electrically coupling the first and second sheet portions (32a, 32b, 42a, 42b), wherein the interconnection element (53) comprises a vertical interconnection extending along a normal direction to a main surface of one of the first and second sheet portions, and
a body of insulator material disposed on one of the first and second sheet portions (42a, 42b), the body having a third sheet portion (42c) of electrical conductive material formed on a surface of the body opposite said one of the first and second sheet portions.

**3.** The slot cavity element (30, 40) of claim 1, further comprising a first body (34, 44c) of an insulator material having a first surface and a second surface opposite the first surface, each of the first and second surfaces being of substantially planar shape and having a greater surface area than any remaining surface of the first body (34, 44c), wherein the first sheet portion (32a, 42a) is formed on the first surface of the first body (34, 44c) and the second sheet portion (32b, 42b) is formed on the second surface of the first body (34, 44c) such that the first body (34, 44c) forms a slot cavity feature of the at least one electrically insulating slot cavity feature.

**4.** The slot cavity element (30, 40) of claim 3, further comprising an interconnection element (53) electrically coupling the first and second sheet portions (32a, 32b, 42a, 42b).

**5.** The slot cavity element (30, 40) of claim 4, wherein the interconnection element (53) comprises a vertical interconnection extending at least partially through the first body (34, 44c) or completely outside of the first body (34, 44c) along an outer surface of the first body (34, 44c), the outer surface connecting the first surface with the second surface.

**6.** The slot cavity element (30, 40) of one of claims 3 to 5, wherein the insulator material is an epoxy resin comprising material, and/or wherein the electrical conductive material comprises at least one of copper, silver, gold, and aluminum, and/or
wherein a length of the first body (34, 44c) is in a range from about 20 mm to about 200 mm, and/or wherein a width of the first body (34, 44c) is in a range from about 5 mm to about 150 mm.

7. The slot cavity element (40) of one of claims 3 to 6, further comprising a second body (44b) of insulator material disposed on one of the first and second sheet portions (42a, 42b), the second body (44b) having a third sheet portion (42c) of electrical conductive material formed on a surface of the second body (44b) opposite the one of the first and second sheet portions (42a, 42b).

8. The slot cavity element of one (30, 40) of claims 1 to 7, wherein at least one of the first and second sheet portions (32a, 32b, 42a, 42b) have a thickness in a range from about 10 μm to about 10,000 μm, and/or wherein the first body (34, 44c) has a thickness in a range from about 50 μm to about 10,000 μm, and/or wherein the slot cavity element (30, 40) has a rejection mode in a range from about 2.40 to 2.50 GHz, and/or
wherein the first sheet portion (72a) and the second sheet portion (72b) are provided as coplanar sheet portions separated by an air gap (74a, 74b) forming a slot cavity feature of the at least one electrically insulating slot cavity feature along one side of the first and second sheet portions (72a, 72b).

9. An RFID tag (10, 20) for reading electronic data provided by an RFID chip (12, 22) at a reading frequency, comprising:

an antenna (14, 24) of substantially planar form and defining a gap (16, 26) and configured to operate at the reading frequency;
the RFID chip (12, 22) electrically coupled to the antenna (14, 24) across the gap (16, 26); and
the slot cavity element (30, 40, 70) of one of claims 1 to 8,
wherein the antenna (14, 24) is disposed over a main surface of first or second sheet portion (32a, 42a, 72a, 32b, 42b, 72b), the antenna being substantially parallel to the main surface of the first or second sheet portion (32a, 42a, 72a, 32b, 42b, 72b).

10. The RFID tag (10, 20) of claim 9, wherein the antenna (14, 24) is made of at least one of copper, silver, steel, and aluminum, and/or wherein the antenna (14, 24) has an antenna loop portion (14a, 24a) and the slot cavity element (30, 40) has a hole at least partially extending through the slot cavity element (30, 40) in alignment with the antenna loop portion (14a, 24a), the antenna loop portion (14a, 24a) at least partially extending into the hole, the RFID chip (12, 22) being within an extension plane of a slot cavity feature of the at least one electrically insulating slot cavity feature and/or the antenna being on a button tag with the button tag being completely arranged within the hole in a plane substantially coplanar with the slot cavity between the first and second sheet portions.

11. The RFID tag (10, 20) of claim 9 or 10, wherein the antenna (14, 24) is formed on or embedded into a tag substrate (18), such as a substrate comprising PP, PE, PET or paper or an epoxy resin containing material, the tag substrate (18) having a thickness in a range from about 0.5 mm to about 5 mm, wherein the antenna (14, 24) is made of an etched conductive material arranged on a surface of the tag substrate or of conductive ink printed onto the surface of the tag substrate (18).

12. A container comprising:

a container body, wherein the container body is preferably filled with a liquid-containing substance; and
the RFID tag (10, 20) of one of claims 9 to 11, wherein the RFID tag (10, 20) is arranged on an outer surface of the container body or the container body is a cast body and the RFID tag (10, 20) is in-molded into the container body.

13. Use of the container of claim 12 with a microwave oven for heating the liquid-containing substance, wherein the microwave oven has an electric power of at least 800 W, such as one of 900 W, 1500 W, 1800 W, and 2100 W.

**Patentansprüche**

1. Schlitzkavitätselement (30, 40, 70) für RFID-Tags (10, 20), wobei das Schlitzkavitätselement (30, 40) umfasst:

einen ersten Flächenabschnitt (32a, 42a, 72a) aus elektrisch leitendem Material; und
einen zweiten Flächenabschnitt (32b, 42b, 72b) aus elektrisch leitendem Material,
wobei der erste Flächenabschnitt (32a, 42a, 72a) und der zweite Flächenabschnitt (32a, 42b, 72b) durch mindestens eine elektrisch isolierende Schlitzkavitätsstruktur getrennt sind, die zwischen dem ersten Flächenabschnitt (32a, 42a, 72a) und dem zweiten Flächenabschnitt (32b, 42b, 72b) ausgebildet ist, und
wobei der erste Flächenabschnitt (72a) als ein ringförmiger Flächenabschnitt ausgebildet ist und der zweite Flächenabschnitt (72b) als ein Streifenabschnitt ausgebildet ist,

**dadurch gekennzeichnet, dass** der zweite Flächenabschnitt (72b) innerhalb einer ringförmigen Öffnung des ersten Flächenabschnitts (72a) derart angeordnet ist, dass der erste Flächenabschnitt (72a) den zweiten Flächenabschnitt (72b) umgibt, wobei die ersten und zweiten Flächenabschnitte (72a, 72b) an gegenüberliegenden Seiten des zweiten Flächenabschnitts (72b) elektrisch gekoppelt sind.

**2.** Schlitzkavitätselement (30, 40) nach Anspruch 1, ferner umfassend mindestens eines von:

einem Verbindungselement (53), das die ersten und zweiten Flächenabschnitte (32a, 32b, 42a, 42b) elektrisch koppelt, wobei das Verbindungselement (53) eine vertikale Verbindung umfasst, die sich entlang einer Normalrichtung zu einer Hauptfläche eines der ersten und zweiten Flächenabschnitte erstreckt, und
einem Körper aus Isolatormaterial, der auf einem der ersten und zweiten Flächenabschnitte (42a, 42b) angeordnet ist, wobei der Körper einen dritten Flächenabschnitt (42c) aus elektrisch leitendem Material aufweist, der auf einer Oberfläche des Körpers gegenüber dem einen der ersten und zweiten Flächenabschnitte ausgebildet ist.

**3.** Schlitzkavitätselement (30, 40) nach Anspruch 1, ferner umfassend einen ersten Körper (34, 44c) aus einem Isolatormaterial mit einer ersten Oberfläche und einer der ersten Oberfläche gegenüberliegenden zweiten Oberfläche, wobei jede der ersten und zweiten Oberflächen im Wesentlichen ebene Form aufweist und eine größere Fläche als jede verbleibende Oberfläche des ersten Körpers (34, 44c) aufweist, wobei der erste Flächenabschnitt (32a, 42a) auf der ersten Oberfläche des ersten Körpers (34, 44c) ausgebildet ist und der zweite Flächenabschnitt (32b, 42b) auf der zweiten Oberfläche des ersten Körpers (34, 44c) derart ausgebildet ist, dass der erste Körper (34, 44c) eine Schlitzkavitätsstruktur der mindestens einen elektrisch isolierenden Schlitzkavitätsstruktur bildet.

**4.** Schlitzkavitätselement (30, 40) nach Anspruch 3, ferner umfassend ein Verbindungselement (53), das die ersten und zweiten Flächenabschnitte (32a, 32b, 42a, 42b) elektrisch koppelt.

**5.** Schlitzkavitätselement (30, 40) nach Anspruch 4, wobei das Verbindungselement (53) eine vertikale Verbindung umfasst, die sich zumindest teilweise durch den ersten Körper (34, 44c) oder vollständig außerhalb des ersten Körpers (34, 44c) entlang einer Außenfläche des ersten Körpers (34, 44c) erstreckt, wobei die Außenfläche die erste Oberfläche mit der zweiten Oberfläche verbindet.

**6.** Schlitzkavitätselement (30, 40) nach einem der Ansprüche 3 bis 5, wobei das Isolatormaterial ein Epoxidharz umfassendes Material ist, und/oder wobei das elektrisch leitende Material mindestens eines von Kupfer, Silber, Gold und Aluminium umfasst, und/oder wobei eine Länge des ersten Körpers (34, 44c) in einem Bereich von etwa 20 mm bis etwa 200 mm liegt, und/oder wobei eine Breite des ersten Körpers (34, 44c) in einem Bereich von etwa 5 mm bis etwa 150 mm liegt.

**7.** Schlitzkavitätselement (40) nach einem der Ansprüche 3 bis 6, ferner umfassend einen zweiten Körper (44b) aus Isolatormaterial, der auf einem der ersten und zweiten Flächenabschnitte (42a, 42b) angeordnet ist, wobei der zweite Körper (44b) einen dritten Flächenabschnitt (42c) aus elektrisch leitendem Material aufweist, der auf einer Oberfläche des zweiten Körpers (44b) gegenüber dem einen der ersten und zweiten Flächenabschnitte (42a, 42b) ausgebildet ist.

**8.** Schlitzkavitätselement (30, 40) nach einem der Ansprüche 1 bis 7, wobei mindestens einer der ersten und zweiten Flächenabschnitte (32a, 32b, 42a, 42b) eine Dicke in einem Bereich von etwa 10 μm bis etwa 10.000 μm aufweist, und/oder wobei der erste Körper (34, 44c) eine Dicke in einem Bereich von etwa 50 μm bis etwa 10.000 μm aufweist, und/oder wobei das Schlitzkavitätselement (30, 40) einen Sperrmodus in einem Bereich von etwa 2,40 bis 2,50 GHz aufweist, und/oder
wobei der erste Flächenabschnitt (72a) und der zweite Flächenabschnitt (72b) als koplanare Flächenabschnitte bereitgestellt sind, die durch einen Luftspalt (74a, 74b) getrennt sind, der eine Schlitzkavitätsstruktur der mindestens einen elektrisch isolierenden Schlitzkavitätsstruktur entlang einer Seite der ersten und zweiten Flächenabschnitte (72a, 72b) bildet.

**9.** RFID-Tag (10, 20) zum Auslesen elektronischer Daten, die durch einen RFID-Chip (12, 22) bei einer Lesefrequenz bereitgestellt werden, umfassend:

eine Antenne (14, 24) von im Wesentlichen ebener Form und einen Spalt (16, 26) definierend und dazu eingerichtet, bei der Lesefrequenz zu arbeiten;

den RFID-Chip (12, 22), der über den Spalt (16, 26) elektrisch mit der Antenne (14, 24) gekoppelt ist; und
das Schlitzkavitätselement (30, 40, 70) nach einem der Ansprüche 1 bis 8,
wobei die Antenne (14, 24) über einer Hauptfläche des ersten oder zweiten Flächenabschnitts (32a, 42a, 72a, 32b, 42b, 72b) angeordnet ist, wobei die Antenne im Wesentlichen parallel zu der Hauptfläche des ersten oder zweiten Flächenabschnitts (32a, 42a, 72a, 32b, 42b, 72b) ist.

**10.** RFID-Tag (10, 20) nach Anspruch 9, wobei die Antenne (14, 24) aus mindestens einem von Kupfer, Silber, Stahl und Aluminium hergestellt ist, und/oder wobei die Antenne (14, 24) einen Antennenschleifenabschnitt (14a, 24a) aufweist und das Schlitzkavitätselement (30, 40) ein Loch aufweist, das sich zumindest teilweise durch das Schlitzkavitätselement (30, 40) in Ausrichtung mit dem Antennenschleifenabschnitt (14a, 24a) erstreckt, wobei sich der Antennenschleifenabschnitt (14a, 24a) zumindest teilweise in das Loch erstreckt, wobei der RFID-Chip (12, 22) innerhalb einer Erstreckungsebene einer Schlitzkavitätsstruktur der mindestens einen elektrisch isolierenden Schlitzkavitätsstruktur liegt und/oder wobei die Antenne auf einem Button-Tag ist, wobei der Button-Tag vollständig innerhalb des Lochs in einer Ebene angeordnet ist, die im Wesentlichen koplanar mit der Schlitzkavität zwischen den ersten und zweiten Flächenabschnitten ist.

**11.** RFID-Tag (10, 20) nach Anspruch 9 oder 10, wobei die Antenne (14, 24) auf einem Tag-Substrat (18) ausgebildet oder in dieses eingebettet ist, wie etwa einem Substrat, das PP, PE, PET oder Papier oder ein Epoxidharz enthaltendes Material umfasst, wobei das Tag-Substrat (18) eine Dicke in einem Bereich von etwa 0,5 mm bis etwa 5 mm aufweist, wobei die Antenne (14, 24) aus einem geätzten leitfähigen Material hergestellt ist, das auf einer Oberfläche des Tag-Substrats angeordnet ist, oder aus leitfähiger Tinte, die auf die Oberfläche des Tag-Substrats (18) gedruckt ist.

**12.** Behälter, umfassend:

einen Behälterkörper, wobei der Behälterkörper vorzugsweise mit einer flüssigkeitshaltigen Substanz gefüllt ist; und
den RFID-Tag (10, 20) nach einem der Ansprüche 9 bis 11, wobei der RFID-Tag (10, 20) auf einer Außenfläche des Behälterkörpers angeordnet ist oder der Behälterkörper ein Gusskörper ist und der RFID-Tag (10, 20) in den Behälterkörper eingeformt ist.

**13.** Verwendung des Behälters nach Anspruch 12 mit einem Mikrowellenofen zum Erwärmen der flüssigkeitshaltigen Substanz, wobei der Mikrowellenofen eine elektrische Leistung von mindestens 800 W aufweist, wie etwa eine von 900 W, 1500 W, 1800 W und 2100 W.

## Revendications

**1.** Élément de cavité à fente (30, 40, 70) pour étiquettes RFID (10, 20), l'élément de cavité à fente (30, 40) comprenant :

une première portion de feuille (32a, 42a, 72a) de matériau électriquement conducteur ; et
une deuxième portion de feuille (32b, 42b, 72b) de matériau électriquement conducteur,
dans lequel la première portion de feuille (32a, 42a, 72a) et la deuxième portion de feuille (32a, 42b, 72b) sont séparées par au moins une caractéristique de cavité à fente électriquement isolante formée entre la première portion de feuille (32a, 42a, 72a) et la deuxième portion de feuille (32b, 42b, 72b), et
dans lequel la première portion de feuille (72a) est formée comme une portion de feuille annulaire et la deuxième portion de feuille (72b) est formée comme une portion en bande,
**caractérisé en ce que** la deuxième portion de feuille (72b) est agencée dans une ouverture annulaire de la première portion de feuille (72a) de telle sorte que la première portion de feuille (72a) entoure la deuxième portion de feuille (72b), les première et deuxième portions de feuille (72a, 72b) étant couplées électriquement sur les côtés opposés de la deuxième portion de feuille (72b).

**2.** Élément de cavité à fente (30, 40) selon la revendication 1, comprenant en outre au moins l'un des éléments suivants :

un élément d'interconnexion (53) couplant électriquement les première et deuxième portions de feuille (32a, 32b, 42a, 42b), dans lequel l'élément d'interconnexion (53) comprend une interconnexion verticale qui s'étend dans une direction normale à une surface principale de l'une des première et deuxième portions de feuille, et
un corps de matériau isolant disposé sur l'une des première et deuxième portions de feuille (42a, 42b), le corps comportant une troisième portion de feuille (42c) de matériau électriquement conducteur formée sur une surface

du corps qui est opposée à ladite une des première et deuxième portions de feuille.

3. Élément de cavité à fente (30, 40) selon la revendication 1, comprenant en outre un premier corps (34, 44c) d'un matériau isolant comportant une première surface et une deuxième surface opposée à la première surface, chacune des première et deuxième surfaces étant de forme substantiellement plane et ayant une surface plus grande que toute autre surface du premier corps (34, 44c), dans lequel la première portion de feuille (32a, 42a) est formée sur la première surface du premier corps (34, 44c) et la deuxième portion de feuille (32b, 42b) est formée sur la deuxième surface du premier corps (34, 44c) de sorte que le premier corps (34, 44c) forme une caractéristique de cavité à fente de ladite au moins une caractéristique de cavité à fente électriquement isolante.

4. Élément de cavité à fente (30, 40) selon la revendication 3, comprenant en outre un élément d'interconnexion (53) couplant électriquement les première et deuxième portions de feuille (32a, 32b, 42a, 42b).

5. Élément de cavité à fente (30, 40) selon la revendication 4, dans lequel l'élément d'interconnexion (53) comprend une interconnexion verticale qui s'étend au moins partiellement à travers le premier corps (34, 44c) ou complètement à l'extérieur du premier corps (34, 44c) le long d'une surface externe du premier corps (34, 44c), la surface externe connectant la première surface à la deuxième surface.

6. Élément de cavité à fente (30, 40) selon l'une des revendications 3 à 5,

dans lequel le matériau isolant est une résine époxyde comprenant un matériau, et/ou dans lequel le matériau électriquement conducteur comprend au moins un élément parmi le cuivre, l'argent, l'or et l'aluminium, et/ou dans lequel la longueur du premier corps (34, 44c) est comprise dans une plage d'environ 20 mm à environ 200 mm, et/ou dans lequel la largeur du premier corps (34, 44c) est comprise dans une plage d'environ 5 mm à environ 150 mm.

7. Élément de cavité à fente (40) selon l'une des revendications 3 à 6, comprenant en outre un deuxième corps (44b) de matériau isolant disposé sur l'une des première et deuxième portions de feuille (42a, 42b), le deuxième corps (44b) comportant une troisième portion de feuille (42c) de matériau électriquement conducteur formée sur une surface du deuxième corps (44b) opposée à ladite une des première et deuxième portions de feuille (42a, 42b).

8. Élément de cavité à fente (30, 40) selon l'une des revendications 1 à 7,

dans lequel au moins l'une des première et deuxième portions de feuille (32a, 32b, 42a, 42b) présente une épaisseur comprise dans une plage d'environ 10 μm à environ 10 000 μm, et/ou dans lequel le premier corps (34, 44c) présente une épaisseur comprise dans une plage d'environ 50 μm à environ 10 000 μm, et/ou dans lequel l'élément de cavité à fente (30, 40) comporte un mode de réjection dans une plage d'environ 2,40 GHz à 2,50 GHz, et/ou

dans lequel la première portion de feuille (72a) et la deuxième portion de feuille (72b) sont pourvues comme des portions de feuille coplanaires séparées par un intervalle d'air (74a, 74b) formant une caractéristique de cavité à fente de ladite au moins une caractéristique de cavité à fente électriquement isolante le long d'un côté desdites première et deuxième portions de feuille (72a, 72b).

9. Étiquette RFID (10, 20) pour la lecture de données électroniques pourvues par une puce RFID (12, 22) à une fréquence de lecture, comprenant :

une antenne (14, 24) de forme substantiellement plane et définissant un intervalle (16, 26) et configurée pour fonctionner à la fréquence de lecture ;

la puce RFID (12, 22) couplée électriquement à l'antenne (14, 24) à travers l'intervalle (16, 26) ; et

l'élément de cavité à fente (30, 40, 70) selon l'une des revendications 1 à 8,

dans lequel l'antenne (14, 24) est disposée sur une surface principale de la première ou deuxième portion de feuille (32a, 42a, 72a, 32b, 42b, 72b), l'antenne étant substantiellement parallèle à la surface principale de la première ou deuxième portion de feuille (32a, 42a, 72a, 32b, 42b, 72b).

10. Étiquette RFID (10, 20) selon la revendication 9, dans lequel l'antenne (14, 24) est constituée d'au moins un élément parmi le cuivre, l'argent, l'acier et l'aluminium, et/ou dans lequel l'antenne (14, 24) comporte une portion de boucle d'antenne (14a, 24a) et l'élément de cavité à fente (30, 40) comporte un trou s'étendant au moins partiellement à travers l'élément de cavité à fente (30, 40) en alignement avec la portion de boucle d'antenne (14a, 24a), la portion de

boucle d'antenne (14a, 24a) s'étendant au moins partiellement dans le trou, la puce RFID (12, 22) se trouvant dans un plan d'extension d'une caractéristique de cavité à fente de ladite au moins une caractéristique de cavité à fente électriquement isolante et/ou l'antenne étant montée sur une étiquette bouton, ladite étiquette bouton étant agencée complètement à l'intérieur du trou dans un plan substantiellement coplanaire avec la cavité à fente entre les première et deuxième portions de feuille.

**11.** Étiquette RFID (10, 20) selon la revendication 9 ou 10, dans lequel l'antenne (14, 24) est formée sur ou intégrée dans un substrat d'étiquette (18), tel qu'un substrat composé de PP, de PE, de PETou de papier, ou d'un matériau contenant de la résine époxy, le substrat d'étiquette (18) présentant une épaisseur comprise dans une plage d'environ 0,5 mm à environ 5 mm, dans lequel l'antenne (14, 24) est constituée d'un matériau conducteur gravé agencé sur une surface du substrat d'étiquette ou d'une encre conductrice imprimée sur la surface du substrat d'étiquette (18).

**12.** Conteneur comprenant :

un corps de conteneur, dans lequel le corps de conteneur est de préférence rempli d'une substance contenant un liquide ; et
l'étiquette RFID (10, 20) selon l'une des revendications 9 à 11, dans lequel l'étiquette RFID (10, 20) est agencée sur une surface externe du corps de conteneur, ou le corps de conteneur est un corps coulé et l'étiquette RFID (10, 20) est moulée dans le corps de conteneur.

**13.** Utilisation du conteneur selon la revendication 12 avec un four à micro-ondes pour chauffer la substance contenant un liquide, dans lequel le four à micro-ondes a une puissance électrique d'au moins 800 W, par exemple de 900 W, 1500 W, 1800 W ou 2100 W.

10
16
14a
14
18
14c
12
14b

FIG. 1a

20
26
24b
24a
P
22
P
24c

FIG. 1b

30
W
10,20
36
32a
34
32b
H
L

FIG. 2

Rejection
Resonance
2.45GHz

FIG. 3

40
W
10,20
42d
42c
42a
42b
46
44a
44b
44c
H
L

FIG. 4

50
y
E
52a
53
x

FIG. 5

62a
Js
63a
a)
63b
62a2
62a
Js
62a1
b)
62a3
62a''
c)
62a'''
d)

FIG. 6

70
72a
74b
72b
74a

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20180189623 A1
- EP 4120133 A1
- US 2011168788 A1